# EUROPÄISCHE PATENTSCHRIFT

(11) **EP 2 768 654 B1**
(45) Veröffentlichungstag und Bekanntmachung des Hinweises auf die Patenterteilung: **01.11.2017**
(21) Anmeldenummer: 12727587.3
(22) Anmeldetag: 11.05.2012
(51) Int. Cl.: B65H 29/00, B29C 49/42, B29C 49/12, B29C 49/36, B29C 49/48, B29K 67/00

(54) **VORRICHTUNG ZUR HALTERUNG VON WERKSTÜCKEN**
DEVICE FOR HOLDING WORKPIECES
DISPOSITIF DE RETENUE DE PIÈCES

(30) Priorität: 21.10.2011 DE 102011116883
(43) Veröffentlichungstag der Anmeldung: 27.08.2014
(73) Patentinhaber: KHS Corpoplast GmbH, 22145 Hamburg (DE)
(72) Erfinder: LINKE, Michael, 22159 Hamburg (DE); KLATT, Dieter, 22147 Hamburg (DE); BAUMGARTE, Rolf, 22926 Ahrensburg (DE)
(74) Vertreter: Hausfeld, Norbert
(86) Internationale Anmeldenummer: PCT/EP2012/002049
(87) Internationale Veröffentlichungsnummer: WO 2013/056753

(56) Entgegenhaltungen:
- CN-C- 100 503 211
- DE-A1- 10 035 572
- US-A- 4 116 609
- US-B1- 6 302 172

## Beschreibung

Die Erfindung betrifft eine Vorrichtung zur Halterung von Werkstücken, die zangenartig ausgebildet und mit mindestens einem ersten und einem zweiten Zangenarm versehen ist, sowie bei der die Zangenarme von einer Zangenbasis gehaltert und mindestens in einer Öffnungs- und in einer Schließpositionierung anordbar sind, sowie bei der die Zangenbasis in Gebrauchsstellung auf einem Übergaberad angeordnet ist, wobei eine Öffnungsbewegung der Zangenarme mit einer Bewegungskomponente quer zu einer radialen Richtung des Übergaberades erfolgt.

Die Erfindung betrifft zudem eine Vorrichtung zur Halterung von Werkstücken mit einer wie eingangs beschriebenen, zangenartig ausgebildeten Vorrichtung und mit einem Übergaberad, auf dem die Zangenbasis der zangenartig ausgebildeten Vorrichtung angeordnet ist.

Die Erfindung betrifft darüber hinaus eine Vorrichtung zur Blasformung von Behältern, die mindestens eine Blasstation mit einer Blasform und mindestens ein Tragelement zur Positionierung von Vorformlingen entlang eines Transportweges aufweist. Hierbei kann vorgesehen sein, dass das Tragelement von einem rotierenden Übergaberad gehalten ist, relativ zu dem das Tragelement beweglich gelagert ist, sowie dass eine Kurvensteuerung für das Tragelement verwendet ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Für die Handhabung der Vorformlinge und zur Handhabung der geblasenen Behälter werden innerhalb der Blasmaschine häufig sogenannte Übergaberäder verwendet, die mit Tragelementen für die Vorformlinge oder Flanschen ausgestattet sind. Die Tragelemente können hierbei entweder direkt auf die Vorformlinge oder Flaschen zugreifen, oder separate Transportelemente befördern, die ihrerseits direkt die Vorformlinge oder Flaschen haltern. Zur Unterstützung von Übergabevorgängen sind die Tragelemente relativ zum Übergaberad typischerweise verschwenkbar gelagert. Zusätzlich ist häufig auch eine Teleskopierbarkeit realisiert. Zur Positionsvorgabe für die Tragelemente werden Kurvensteuerungen verwendet. Die Tragelemente werden hierzu mit Kurvenrollen an ortsfest angeordneten Kurven vorbeigeführt.

Ein Problem bei der Verwendung von derartigen mit Tragelementen versehenen Übergaberädern besteht darin, bei einem Auftreten von mechanischen Störungen, insbesondere bei einem Auftreten von Kollisionen, schwere Schäden zu vermeiden. Hierzu ist es bekannt, die Tragarme unter Verwendung von Überlastkupplungen im Bereich der Übergaberäder zu lagern. Derartige Überlastkupplungen sind zum einen teuer und vergrößern darüber hinaus das Baugewicht der rotierenden Übergaberäder.

Es ist ebenfalls bereits bekannt, die Tragarme mit aktiven Positionierelementen auszustatten, die pneumatisch oder elektrisch ein Ausfahren bzw. Einfahren der Tragarme derart vorgeben, dass diese in einer Arbeitspositionierung oder einer Ruhepositionierung angeordnet sind. Entsprechende Positioniereinrichtungen verursachen jedoch relativ hohe Kosten und vergrößern das Baugewicht des Übergaberades, so dass vergrößerte Trägheitseigenschaften auftreten.

In der DE 10 2007 054 388 wird bereits ein gattungsgemäßes zangenartiges Halterungselement beschrieben, das bei einer Einwirkung von überlast auslenkbar im Bereich eines Trägers gehaltert ist, die betreffende Konstruktion erweist sich jedoch unter Berücksichtigung der Vielzahl von erforderlichen Bauelementen als teuer und somit nur bedingt für einen Einsatz in großen Stückzahlen geeignet.

Die DE 100 35 572 A1 offenbart eine weitere gattungsgemäße Vorrichtung zur Halterung von Werkstücken, die zangenartig ausgebildet und mit mindestens einem ersten und einem zweiten Zangenarm versehen ist, sowie bei der die Zangenarme von einer Zangenbasis gehaltert mindestens in einer Öffnungs- und in einer Schließpositionierung anordbar sind, sowie bei der die Zangenbasis in Gebrauchsstellung auf einem Übergaberad angeordnet ist, wobei eine Öffnungsbewegung der Zangenarme mit einer Bewegungskomponente quer zu einer radialen Richtung des Übergaberades erfolgt, und wobei der zweite Zangenarm eine von den Zangenarmen mindestens bereichsweise aufgespannte Halterungsausnehmung nur in einem Bereich begrenzt, der relativ zu einer quer zur Mittellinie verlaufenden Quermittellinie der Halterungsausnehmung in einer radialen Richtung des Übergaberades außenseitig angeordnet ist. Ein weiteres Problem bei der Verwendung von konventionellen zangenartigen Haltelementen besteht darin, dass bei einer Einwirkung von Querkräften auf das zu handhabende Werkstück eine ungewollte Öffnungsbewegung der Zange nicht auszuschließen ist. Ein kurzzeitiges Öffnen der Zange kann aber zu einem Verlieren des Werkstückes und somit zu Störungen im Produktionsablauf führen.

Bei einer Anwendung von zangenartigen Halteelementen gemäß dem Stand der Technik bei der Herstellung von geblasenen Behältern tritt bei bestimmten Produktionsabläufen das Problem auf, dass die Behälter bei einem Öffnen der Blasformen an einer der Formhälften anhaften. Ein derartiges Anhaften kann zu der vorstehend beschriebenen unerwünschten Öffnungsbewegung der Zange führen. Grundsätzlich wäre es zwar denkbar, während derartiger Prozesszeiten eine Öffnungsfähigkeit der Zange oder eine Auslenkbarkeit mechanisch zu blockieren, dies ist aber unerwünscht, da im Ausnahmefall ein zusätzliches Auftreten von mechanischen Störungen nicht ausgeschlossen werden kann, bei dem zur Vermeidung von Maschinenschäden die Auslenkbarkeit oder Öffnungsfähigkeit erforderlich wäre.

Aufgabe der vorliegenden Erfindung ist es, eine Vorrichtung der einleitend genannten Art derart zu konstruieren, dass bei einfachem konstruktiven Aufbau eine hohe Betriebssicherheit unterstützt wird.

Diese Aufgabe wird erfindungsgemäß dadurch gelöst, dass sich der erste Zangenarm mindestens bereichsweise beidseitig zu einer in einer radialen Richtung des Übergaberades ausgerichteten Mittellinie der Zangenbasis erstreckt und dass der zweite Zangenarm eine von den Zangenarmen mindestens bereichsweise aufgespannte Halterungsöffnung für die Werkstücke nur in einem Bereich begrenzt, der relativ zu einer quer zur Mittellinie verlaufenden Quermittellinie der Halterungsöffnung in einer radialen Richtung des Übergaberades außenseitig angeordnet ist.

Konventionelle Zangenarme begrenzen die Halterungsöffnung jeweils symmetrisch links und rechts zu einer radialen Mittellinie. Quer zur radialen Richtung wirkende und vom Werkstück auf die Zangenarme übertragende Kräfte führen somit zu einer Kraftbelastung der einzelnen Zangenarme und können zu einer Öffnung der Zange führen. Die erfindungsgemäße Erstreckung des ersten Zangenarmes über die radiale Mittellinie hinaus führt dazu, dass in einem vorgebbaren Bereich entsprechende Querkräfte nur auf den ersten Zangenarm wirken und somit nicht zu einer ungewollten Öffnungsbewegung führen.

Insbesondere die Verlagerung desjenigen Bereiches, in dem die Aufnahmeöffnung von der zweiten Zange begrenzt ist, in den bezüglich der Quermittellinie radial außen liegenden Bereich führt dazu, dass Kraftbelastungen quer zur radialen Richtung oder bezüglich der radialen Richtung schräg bezüglich des Übergaberades nach innen weisend die ungewollten Öffnungsbewegungen nicht generieren können.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Darstellung eines Übergaberades mit einer Mehrzahl von positionierbaren Tragarmen,
- Fig. 6: eine perspektivische Darstellung eines zangenartigen Halteelementes in einem geschlossenen Zustand der Zange,
- Fig. 7: eine perspektivische Darstellung der Anordnung gemäß Figur 6 bei einer Blickrichtung schräg von unten mit leichten Modifikationen im Einführbereich des zweiten Zangenarmes,
- Fig. 8: die Zange gemäß Figur 6 in einer Draufsicht in einem geschlossenen Zustand.
- Fig. 9: Die Zange gemäß Figur 8 in einem geöffneten Zustand.

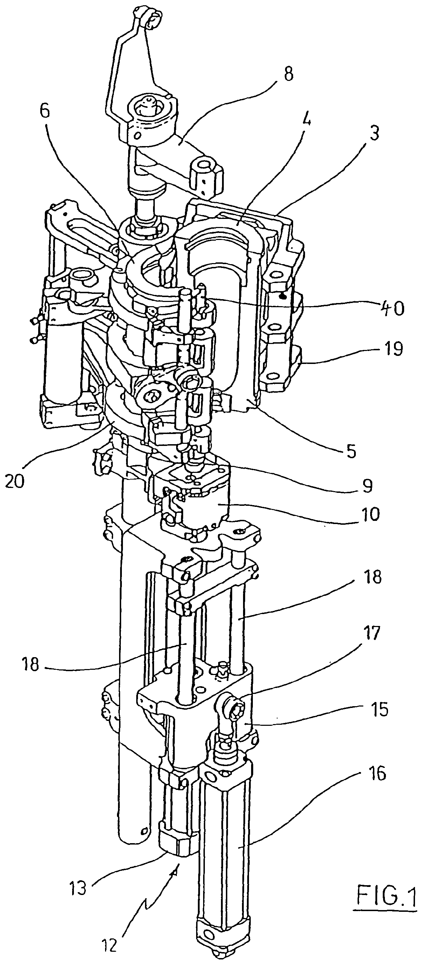

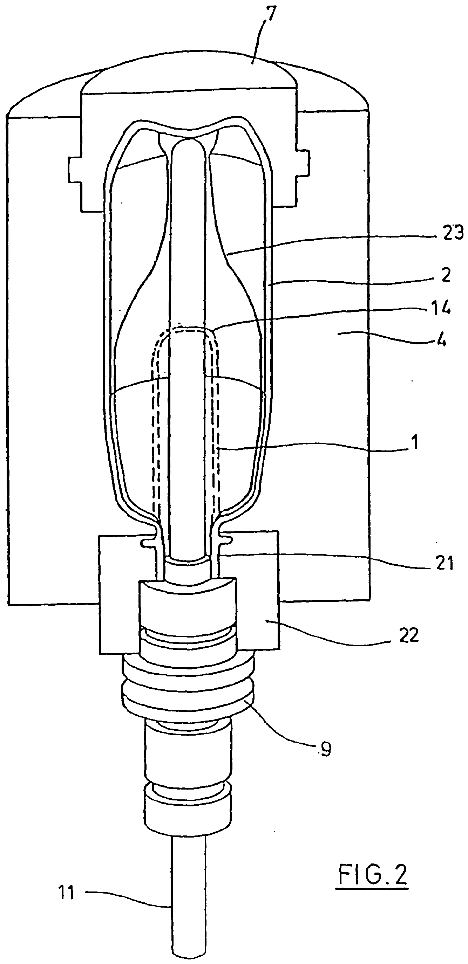

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlusskolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

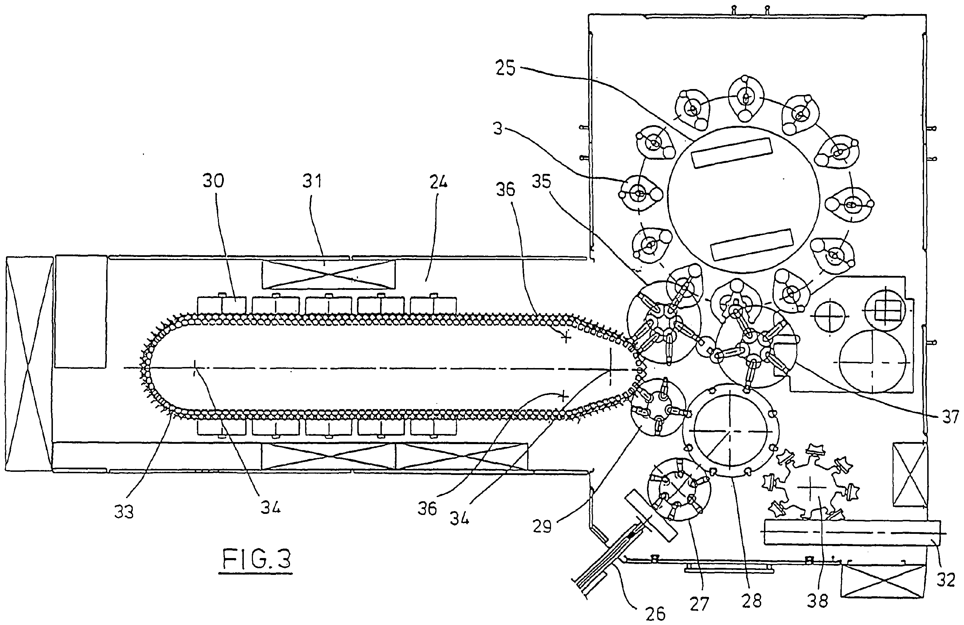

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

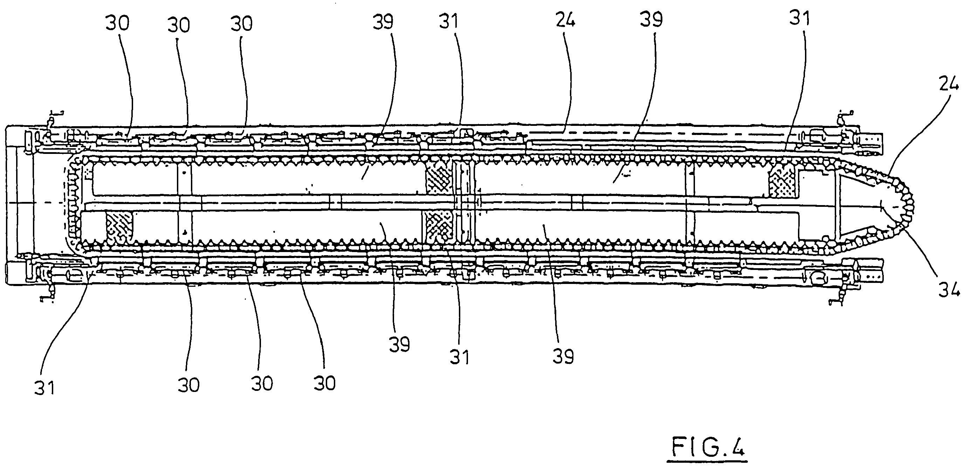

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüber liegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

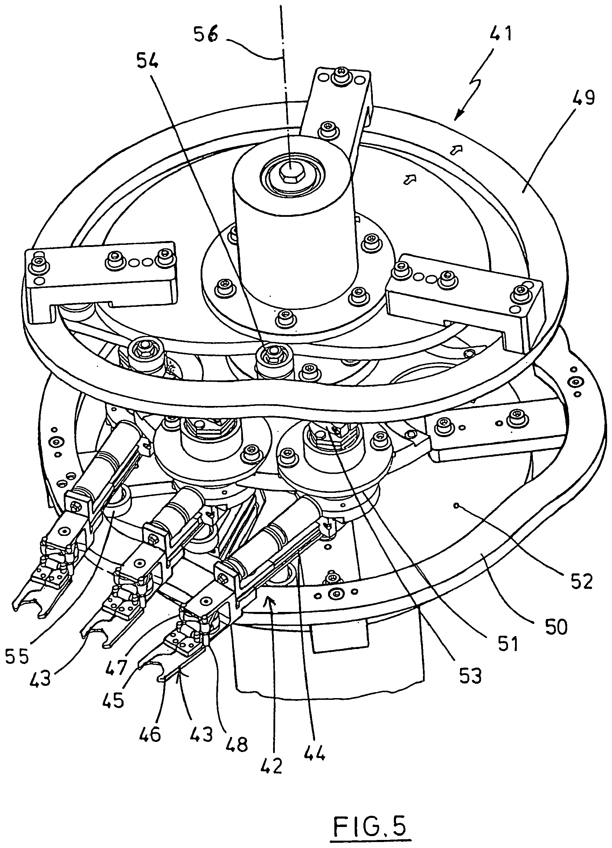

Fig. 5 zeigt ein Übergaberad (41), das beispielsweise in die Positionen für mindestens eines der Übergaberäder (27, 28, 29) eingebaut werden kann. Das Übergaberad (41) ist mit Tragelementen (42) versehen, die zur Handhabung von Vorformlingen (1) und/oder Behältern (2) dienen. Beim dargestellten Ausführungsbeispiel ist das Tragelement (42) aus einem Handhabungselement (43) und einem Tragarm (44) ausgebildet. Das Handhabungselement (43) ist beim dargestellten Ausführungsbeispiel zangenartig realisiert und weist zwei Zangenarme (45, 46) auf, die beweglich von einer Zangenbasis (47) gehaltert sind. Die Zangenbasis (47) ist in ein Grundelement (48) einrastbar oder mit diesem verschraubbar, das vom Tragarm (44) gehalten ist. Derartige Handhabungselemente (43) ergreifen die Vorformlinge (1) oder Behälter (2) direkt. Die Handhabungselemente (43) können aber auch derart realisiert sein, dass ein Kontakt mit Transportelementen vorgesehen ist, die ihrerseits die Vorformlinge (1) oder Behälter (2) tragen. Ein derartiges Transportelement kann beispielsweise als Transportdorn (9) realisiert sein, auf den die Vorformlinge (1) aufgesteckt werden oder in den die Vorformlinge (1) mit ihrem Mündungsbereich eingeführt werden.

Fig. 5 veranschaulicht, dass zur Steuerung von Positionierbewegungen der Tragelemente (42) zwei Kurvenbahnen (49, 50) verwendet sind, die in vertikaler Richtung übereinander angeordnet sind. Die Tragarme (44) sind über Schwenkgelenke (51) an einem Zentralelement (52) des Übergaberades (41) befestigt. Im Bereich der Schwenkgelenke (51) weisen die Tragarme (44) Querhebel (53) auf, die über eine Kurvenrolle (54) entlang der Kurvenbahn (49) geführt sind. Bei einer Rotation des Zentralelementes (52) werden hierdurch Schwenkbewegungen der Tragarme (44) vorgegeben. Bei dem dargestellten Ausführungsbeispiel sind die Kurvenrollen (54) innenseitig entlang der Kurvenbahn (49) geführt.

Die Tragarme (44) sind teleskopierbar ausgebildet und unter Verwendung einer Kurvenrolle (55) entlang der Kurvenbahn (50) geführt, um eine Teleskopierbewegung des Tragarmes (44) vorzugeben. Bei dem dargestellten Ausführungsbeispiel ist auch die Kurvenrolle (55) innenseitig entlang der Kurvenbahn (50) geführt. Bei einem typischen Arbeitsablauf rotiert das Übergaberad (41) um seine Drehachse (56) herum.

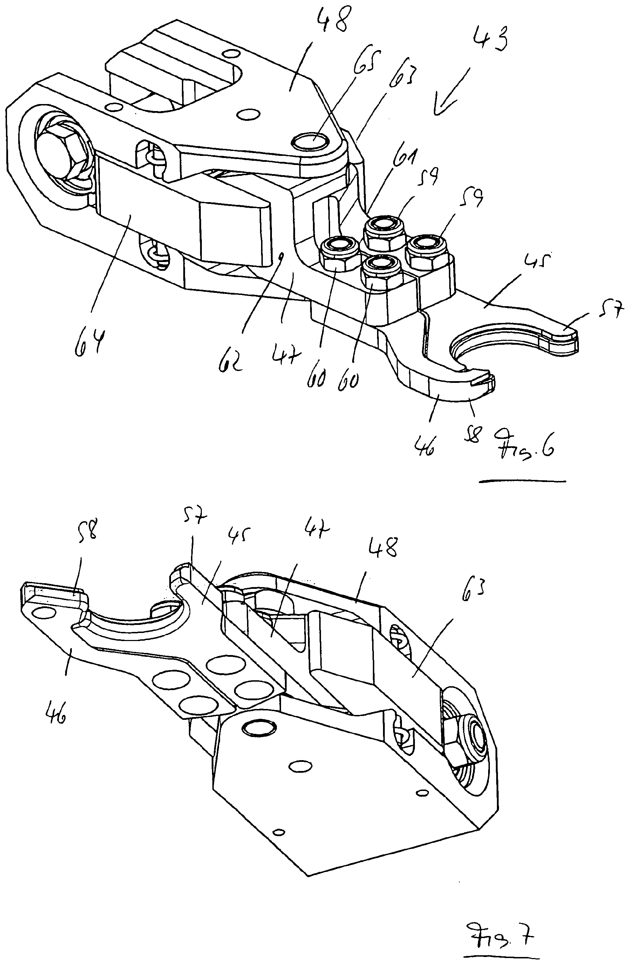

Fig. 6 veranschaulicht in einer perspektivischen Darstellung die Konstruktion des Grundelementes (48) und der Zangenbasis (47) mit den Zangenarmen (45, 46). Es ist erkennbar, dass die Zangenarme (45, 46) Greifenden (57, 58) aufweisen, die zur teilweisen Umschließung eines Halsbereiches eines Vorformlings (1) oder eines Behälters (2) ausgebildet sein können. Die Zangenarme (45, 46) sind über Verbindungselemente (59, 60) mit der Zangenbasis (47) verbunden.

Aus Figur 6 ist ebenfalls erkennbar, dass benachbart zu Seitenflächen (61, 62) der Zangenbasis (47) jeweils Gegenelemente (63, 64) angeordnet sind. Ebenfalls ist eine Drehachse (65) zu erkennen, um die herum die Zangenbasis (47) relativ zum Grundelement (48) verschwenkbar angeordnet ist.

Bei einem Betriebszustand gemäß Figur 6 können die Zangenarme (45, 46) mit ihren Greifenden (57, 58) den Vorformling (1) bzw. einen Behälter (2) ergreifen.

Figur 7 zeigt die Anordnung gemäß Figur 6 in einem leicht modifizierten Zustand eines Endbereiches des zweiten Zangenarmes (46).

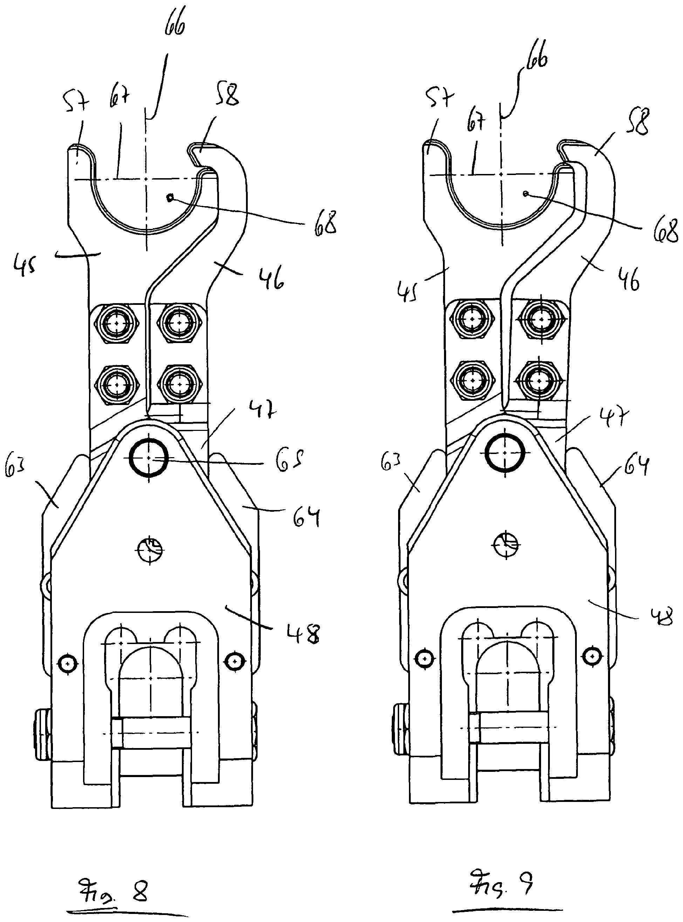

Figur 8 zeigt in einer Draufsicht die Konstruktion der Zangenarme (45, 46) sowie die Zuordnung zur Zangenbasis (47) sowie zum Grundelement (48). Zur Verdeutlichung der geometrischen Zusammenhänge sind eine Mittellinie (66) sowie eine Quermittellinie (67) eingezeichnet. Bei einer Anordnung der Tragelemente (42) im Bereich des Übergaberades (41) verläuft die Mittellinie (66) im Wesentlichen in einer radialen Richtung des Übergaberades (41) und die Quermittellinie (67) quer zu dieser radialen Richtung.

Der erste Zangenarm (45) und der zweite Zangenarm (46) begrenzen gemeinsam mindestens bereichsweise eine Halterungsausnehmung (68), in die der Halsabschnitt des Vorformlings (1) oder des Behälters (2) bei einer Handhabung eingesetzt ist. Typischerweise ist die Halterungsausnehmung (68) in einer der Zangenbasis (47) abgewandelten Richtung offen.

So kennzeichnet Figur 8 veranschaulicht insbesondere, dass sich der erste Zangenarm zu mindestens abschnittsweise beidseitig zur Mittellinie (66) erstreckt. Quer zur Mittellinie (66) wirkende Kräfte können hierdurch beidseitig vom ersten Zangenarm (45) aufgenommen werden. Der zweite Zangenarm (46) begrenzt die Halterungsausnehmung (68) erst in einem Bereich, der bezüglich der Quermittellinie (67) außen liegend und somit der Zangenbasis (47) abgewandt angeordnet ist. Hierdurch wird die Einleitung ungewollter Öffnungskräfte in den zweiten Zangenarm (46) verhindert.

Figur 9 zeigt die Anordnung gemäß Figur 8 in einem geöffneten Zustand der Zange. Der zweite Zangenarm (46) ist hierbei soweit in Richtung der Quermittellinie (67) bezüglich des ersten Zangenarmes (45) verschoben, dass die Halterungsausnehmung (68) in einer radialen nach außen weisenden Richtung freigegeben ist. Der Vorformling (1) beziehungsweise der Behälter (2) kann hierdurch entnommen werden.

Die Durchführung von Öffnungs- und Schließbewegungen der Zangenarme (45, 46) kann nach unterschiedlichen Prinzipien erfolgen. Gedacht ist zum einen an die Verwendung einer passiven Steuerung. Es sind hierbei keine besonderen Betätigungselemente für die Zangenarme (45, 46) vorgesehen, sondern der Vorformling (1) bzw. der Behälter (2) wird von außen in die Halterungsausnehmung (68) hineingedrückt und die entsprechenden Kräfte führen zunächst zu einem Öffnen der Zangenarme (45, 46) und anschließend zu einem erneuten Einrasten. Eine Entnahme des Vorformlings (1) oder des Behälters (2) erfolgt in umgekehrter Richtung durch Aufbringung auf das Werkstück einwirkender Zugkräfte in einer radialen Richtung. Für eine Unterstützung derartiger Bedienabläufe besitzt der zweite Zangenarm (46) im Bereich seines Greifendes (58) geeignete Einführanschrägungen.

## Patentansprüche

1. Vorrichtung zur Halterung von Werkstücken, die zangenartig ausgebildet und mit mindestens einem ersten und einem zweiten Zangenarm versehen ist, sowie bei der die Zangenarme von einer Zangenbasis gehaltert mindestens in einer Öffnungs- und in einer Schließpositionierung anordbar sind, sowie bei der die Zangenbasis dafür geeignet ist in Gebrauchsstellung auf einem Übergaberad angeordnet zu werden, wobei eine Öffnungsbewegung der Zangenarme mit einer Bewegungskomponente quer zu einer radialen Richtung des Übergaberades erfolgt, wobei der zweite Zangenarm eine von den Zangenarmen mindestens bereichsweise aufgespannte Halterungsausnehmung (68) nur in einem Bereich begrenzt, der relativ zu einer quer zur Mittellinie verlaufenden Quermittellinie der Halterungsausnehmung in einer radialen Richtung des Übergaberades außenseitig angeordnet ist, **dadurch gekennzeichnet, dass** sich der erste Zangenarm (45) mindestens bereichsweise beidseitig zu einer In der radialen Richtung des Übergaberades (41) ausgerichteten Mittellinie (66) der Zangenbasis (47) erstreckt.

2. Vorrichtung nach Anspruch 1, **dadurch gekennzeichnet, dass** der erste Zangenarm (45) eine muldenartige Halterungsausnehmung (68) begrenzt.

3. Vorrichtung nach Anspruch 1 und 2, **dadurch gekennzeichnet, dass** sich der Zangenarm (45) bezüglich der Mittellinie (66) mindestens einseitig über die Quermittellinie (67) hinaus in eine der Zangenbasis (47) abgewandte Richtung erstreckt.

4. Vorrichtung nach Anspruch 1 und 2, **dadurch gekennzeichnet, dass** sich der Zangenarm (45) bezüglich der Mittellinie (66) beidseitig über die Quermittellinie (67) hinaus in eine der Zangenbasis (47) abgewandte Richtung erstreckt.

5. Vorrichtung nach einem der Ansprüchen 1 bis 4, **dadurch gekennzeichnet, dass** der zweite Zangenarm (46) mindestens eine Leitfläche zur Beaufschlagung eines Werkstückes aufweist .

6. Vorrichtung nach einem der Ansprüche 1 bis 5, **dadurch gekennzeichnet, dass** die beiden Zangenarme (45, 46) relativ zueinander federnd verspannt angeordnet sind.

7. Vorrichtung nach einem der Ansprüche 1 bis 6, **dadurch gekennzeichnet, dass** mindestens einer der Zangenarme (45, 46) kurvengesteuert positionierbar ist.

8. Vorrichtung nach einem der Ansprüche 1 bis 7, **dadurch gekennzeichnet, dass** die Zangenbasis (47) entgegen der Kraft mindestens einer Feder auslenkbar vom Grundelement (48) gehaltert ist.

9. Vorrichtung zur Halterung von Werkstücken aufweisend eine zangenartig ausgebildete Vorrichtung nach einem der vorhergehenden Ansprüche 1 bis 8 und weiterhin aufweisend ein Übergaberad, auf dem die Zangenbasis der zangenartig ausgebildeten Vorrichtung angeordnet ist.

## Claims

1. A device for holding workpieces, said device being formed like grippers and being provided with at least one first and one second gripper arm, wherein the gripper arms, while being held by a gripper base, can be arranged at least in one opening position and one closing position, wherein the gripper base is adapted to be arranged on a transfer wheel in the position of use, wherein an opening movement of the gripper arms is carried out with a movement component that is transverse in relation to a radial direction of the transfer wheel, wherein the second gripper arm delimits a holding device recess (68) that is spanned by the gripper arms at least in certain regions, delimiting it only in a region that, in relation to a transverse centre line of the holding device recess extending transversely to the centre line, is arranged outside in a radial direction of the transfer wheel,
**characterised in that**
- the first gripper arm (45) extends on either side of a centre line (66) of the gripper base (47) at least in certain regions, said centre line (66) being aligned in the radial direction of the transfer wheel (41).

2. The device in accordance with Claim 1, **characterised in that** the first gripper arm (45) delimits a trough-like holding device recess (68).

3. The device in accordance with Claims 1 and 2, **characterised in that**, as seen with respect to the centre line (66), the gripper arm (45) extends beyond the transverse centre line (67) at least on one side, in a direction facing away from the gripper base (47).

4. The device in accordance with Claims 1 and 2, **characterised in that**, as seen with respect to the centre line (66), the gripper arm (45) extends beyond the transverse centre line (67) on either side, in a direction facing away from the gripper base (47).

5. The device in accordance with any one of Claims 1 to 4, **characterised in that** the second gripper arm (46) has at least one guiding surface for application of a workpiece.

6. The device in accordance with any one of Claims 1 to 5, **characterised in that** the two gripper arms (45, 46) are arranged in relation to each other such that they are braced in a resilient manner.

7. The device in accordance with any one of Claims 1 to 6, **characterised in that** at least one of the gripper arms (45, 46) can be positioned in a cam-controlled manner.

8. The device in accordance with any one of Claims 1 to 7, **characterised in that** the gripper base (47) is held by the base element (48) against the force of at least one spring in a swivelling manner.

9. A device for holding workpieces, comprising a device in accordance with any one of the preceding claims 1 to 8, said device being formed like grippers, wherein the device for holding workpieces further comprises a transfer wheel, wherein the gripper base of the device that is formed like grippers is arranged on said transfer wheel.

## Revendications

1. Dispositif de maintien de pièces d'oeuvre réalisé en forme de pince et doté d'au moins une première et une seconde branche de pince, les branches de pince, maintenues par une base de pince, pouvant être placées au moins en un positionnement d'ouverture et un positionnement de fermeture et la base de pince étant conformée de façon à pouvoir, en position de service, être agencée sur une roue de transfert, un mouvement d'ouverture des branches de pince ayant lieu avec une composante de mouvement transversale par rapport à un sens radial de la roue de transfert, un évidement de maintien (68) s'étendant en partie au moins entre les branches de pince étant limité par la seconde branche de pince uniquement dans une zone qui, en direction radiale de la roue de transfert, est extérieure par rapport à une médiane de l'évidement de maintien transversale par rapport à la ligne médiane, **caractérisé en ce que** la première branche de pince (45) s'étend en partie au moins des deux côtés d'une ligne médiane (66) de la base de pince (47) orientée selon un rayon de la roue de transfert (41).

2. Dispositif selon la revendication 1, **caractérisé en ce que** la première branche de pince (45) délimite un évidement de maintien (68) incurvé en auge.

3. Dispositif selon la revendication 1 et 2, **caractérisé en ce que** la branche de pince (45) s'étend, d'un côté au moins de la médiale (66), au-delà de la médiane transversale (67) selon une direction opposée à la base de pince (47).

4. Dispositif selon la revendication 1 et 2, **caractérisé en ce que** la branche de pince (45) s'étend, des deux côtés de la médiale (66), au-delà de la médiane transversale (67) selon une direction opposée à la base de pince (47).

5. Dispositif selon l'une des revendications 1 à 4, **caractérisé en ce que** la seconde branche de pince (46) présente au moins une surface de guidage pour agir sur une pièce d'oeuvre.

6. Dispositif selon l'une des revendications 1 à 5, **caractérisé en ce que** les deux branches de pince (45, 46) sont agencées de façon à exercer une force de ressort entre elles.

7. Dispositif selon l'une des revendications 1 à 6, **caractérisé en ce que** l'une au moins des branches de pince (45, 46) peut être positionnée par une commande à came.

8. Dispositif selon l'une des revendications 1 à 7, **caractérisé en ce que** la base de pince (47) est maintenue par l'élément de base (48) de façon à pouvoir pivoter contre la force d'au moins un ressort.

9. Dispositif de maintien de pièces d'oeuvre présentant un dispositif de type pince selon l'une des revendications précédentes 1 à 8 et présentant en outre une roue de transfert sur laquelle est agencée la base de pince du dispositif de type pince.
